# FASCICULE DE BREVET EUROPEEN

(11) **EP 4 251 869 B1**
(45) Date de publication et mention de la délivrance du brevet: **07.01.2026**
(21) Numéro de dépôt: 21805990.5
(22) Date de dépôt: 15.11.2021
(51) Int. Cl.: F02F 3/26, F02B 23/10

(54) **PISTON DE MOTEUR À COMBUSTION INTERNE ADAPTÉ POUR LE MOUVEMENT AÉRODYNAMIQUE DU GAZ**
KOLBEN FÜR EINEN VERBRENNUNGSMOTOR, DER ZUR AERODYNAMISCHEN BEWEGUNG VON GAS GEEIGNET IST
PISTON FOR AN INTERNAL COMBUSTION ENGINE, SUITABLE FOR AERODYNAMIC MOVEMENT OF GAS

(30) Priorité: 27.11.2020 FR 2012294
(43) Date de publication de la demande: 04.10.2023
(73) Titulaire: IFP Energies nouvelles, 92500 Rueil-Malmaison (FR)
(72) Inventeur: GAUTROT, Xavier, 92852 RUEIL-MALMAISON CEDEX (FR); LUCA, Paul-Georgian, 92852 RUEIL-MALMAISON CEDEX (FR)
(74) Mandataire: IFP Energies nouvelles
(86) Numéro de dépôt international: PCT/EP2021/081657
(87) Numéro de publication internationale: WO 2022/112035

(56) Documents cités:
- EP-A2- 1 300 565
- CN-A- 103 696 847
- DE-A1- 10 304 167
- DE-A1- 102014 103 301
- DE-A1- 19 928 108
- JP-A- 2018 204 600
- US-A1- 2001 018 904

## Description

### Domaine technique

La présente invention concerne le domaine des pistons pour moteurs à combustion interne, notamment un moteur à combustion interne à allumage commandé.

Un moteur à combustion interne comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible (carburant).

### Technique antérieure

Comme cela est généralement admis, lors de la conception d'un moteur, les contraintes de performances, d'émissions de polluants et de consommation sont de plus en plus en fortes et il convient donc de trouver de nouvelles solutions pour augmenter le rendement final du moteur.

L'augmentation du rendement de combustion est donc un point clé pour limiter les émissions polluantes à performances égales ou supérieures. Pour cela, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

De plus, afin d'assurer un bon rendement ainsi qu'une bonne vitesse de combustion, il est souhaitable d'avoir un haut niveau de turbulence, et plus spécifiquement un haut niveau d'énergie cinétique turbulente, à l'instant de l'allumage du mélange carburé et pendant sa combustion.

Ce niveau de turbulence élevé peut être atteint grâce à l'emploi d'une aérodynamique d'admission particulière, le Swumble^{™} (IFP Energies nouvelles, France). Ce type d'aérodynamique se caractérise par le fait que le mouvement macroscopique du mélange carburé est un composé de swirl (mouvement rotatif des gaz dans le cylindre autour d'un axe vertical cylindre) et de tumble (mouvement rotatif des gaz dans le cylindre selon un axe longitudinal moteur).

Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée des soupapes, aussi bien en termes d'étalement que hauteur de levée maximale.

L'utilisation du Swumble^{™} (IFP Energies nouvelles, France) permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase de compression que ce qu'on observe avec les meilleurs moteurs à allumage commandé actuels. Le Swumble^{™} peut se caractériser notamment par un déplacement continu, tout au long de la compression via la remontée du piston, de l'axe de rotation du mouvement aérodynamique des gaz, d'abord très incliné dans le cylindre au début de la compression (forte composante swirl) pour finir sensiblement aligné avec l'axe longitudinal moteur en fin de compression (forte composante tumble).

Ces mouvements aérodynamiques du gaz sont généralement produits par la forme du conduit d'admission et de la chambre de combustion. Toutefois, afin de garantir que le processus de combustion ainsi créé se réalise dans les meilleures conditions et pour éviter la création de zones de recirculation aérodynamique des gaz (qui pourraient être à l'origine de baisse locale de la turbulence, ou encore de zones de points chauds pouvant aboutir à des combustions anormales par auto-inflammation, de type cliquetis ou préallumage), il convient aussi d'optimiser la forme du piston pour qu'il participe aussi à ce mouvement aérodynamique du gaz dans la chambre de combustion.

Différentes formes de piston ont été développées. Par exemple, la demande de brevet FR2771138 décrit un piston qui comprend des déflecteurs pour diriger le jet de carburant. Toutefois, ces déflecteurs influent aussi sur le mouvement aérodynamique du gaz, mais ne sont pas optimisés pour garantir ces mouvements aérodynamiques des gaz. De la même manière, la demande de brevet US 6725828 décrit un piston adapté à un moteur à combustion interne à allumage commandé à injection directe fonctionnant en charge stratifiée. La forme de la tête du piston est adaptée à l'injection de carburant, mais génère également un mouvement aérodynamique du gaz, mais cette forme de piston n'est pas optimisée pour garantir des mouvements aérodynamiques du gaz du type swirl, du type tumble, ou du type Swumble^{™}. Selon un autre exemple, le modèle d'utilité CN 20787786 concerne un piston avec un creux central et des bosses périphériques, de manière à optimiser le taux de tumble et l'énergie cinétique turbulente. Toutefois, cette forme ne permet pas un bon déplacement du mouvement aérodynamique du gaz vers l'échappement lors de la remontée du piston vers le point mort haut, et pourrait également générer des zones de points chauds. D'autres piston comprenant des embrèvements pour les soupapes et des surfaces inclinées sont connus de JP 2018 204600 A, US 2001/018904 A1 ou DE19928108 A1.

De plus, classiquement, la tête de piston peut comprendre au moins un embrèvement pour une soupape d'admission et au moins un embrèvement pour une soupape d'échappement, afin de permettre l'ouverture des soupapes d'admission et/ou d'échappement au point mort haut. Toutefois, ces embrèvements créent des zones aérodynamiques de recirculation du gaz dans la chambre de combustion. Il est donc important d'optimiser la forme du piston pour éviter la formation de zones de recirculation pour les pistons comprenant des embrèvements.

### Résumé de l'invention

La présente invention a pour but de permettre un déplacement du mouvement aérodynamique du gaz dans la chambre de combustion vers l'échappement lors de la remontée du piston, et d'éviter toute zone de recirculation aérodynamique pouvant créer une zone de point chaud ou de faible niveau local d'énergie cinétique turbulente dans la chambre de combustion. Pour cela, l'invention concerne un piston de moteur à combustion interne, qui comporte des embrèvements pour des soupapes d'admission et d'échappement, et une surface de raccordement entre les embrèvements pour les soupapes d'admission et d'échappement, cette surface de raccordement comportant une portion inclinée en direction de l'au moins un embrèvement pour soupape d'échappement. Cette portion inclinée permet d'optimiser le mouvement aérodynamique du gaz, et de limiter les zones de recirculation aérodynamique du gaz.

L'invention concerne un piston de moteur à combustion interne, ledit piston comprenant au moins un embrèvement pour une soupape d'admission et au moins un embrèvement pour une soupape d'échappement, ledit piston comportant une surface de raccordement entre ledit au moins un embrèvement pour une soupape d'admission et ledit au moins un embrèvement pour une soupape d'échappement. Ladite surface de raccordement comporte une portion inclinée, ladite portion inclinée étant sécante dudit au moins un embrèvement pour une soupape d'échappement, la zone la plus profonde de la portion inclinée étant au niveau de l'intersection avec l'au moins un embrèvement pour soupape d'échappement, et, dans un plan perpendiculaire à l'axe dudit piston, ur axe médian de ladite portion inclinée qui sépare ledit au moins un embrèvement pour une soupape d'admission et ledit au moins un embrèvement pour une soupape d'échappement est désaxé par rapport à un axe médian dudit piston qui sépare ledit au moins un embrèvement pour une soupape d'admission et ledit au moins un embrèvement pour une soupape d'échappement.

Selon un mode de réalisation, ladite portion inclinée est plane.

Avantageusement, ladite surface de raccordement non comprise dans ladite portion inclinée est plane et perpendiculaire à l'axe dudit piston.

Selon un mode de réalisation, ladite portion inclinée est concave, l'axe ou le centre de ladite concavité de la portion inclinée étant non sécant à l'axe dudit piston.

De manière avantageuse, ladite surface de raccordement non comprise dans ladite portion inclinée est concave, l'axe ou le centre de ladite concavité de ladite surface de raccordement étant sécant à l'axe dudit piston.

Conformément à une mise en œuvre, ledit piston comprend deux embrèvements, chacun pour une soupape d'admission.

Selon un aspect, ledit piston comprend deux embrèvements, chacun pour une soupape d'échappement.

Selon une caractéristique, l'angle d'inclinaison de ladite portion inclinée par rapport à un plan perpendiculaire à l'axe du piston est inférieur à 25°, de préférence est compris entre 2 et 15°. Conformément à un mode de réalisation, ladite portion inclinée est sécante avec ledit au moins un embrèvement pour soupape d'échappement avec un rayon de courbure compris entre 1 et 500 mm, de préférence entre 5 et 50 mm.

Selon une option de réalisation, au niveau de l'intersection entre ladite portion inclinée et ledit au moins un embrèvement pour une soupape d'échappement, la hauteur entre ladite portion inclinée par rapport à ladite surface de raccordement est inférieure ou égale à 10 mm, de préférence inférieure ou égale à 5 mm.

Selon une mise en œuvre, ladite portion inclinée a une forme sensiblement rectangulaire dans un plan perpendiculaire à l'axe du piston, de préférence une forme sensiblement carré.

De plus, l'invention concerne un moteur à combustion interne, notamment un moteur à combustion interne à allumage commandé, le moteur comprenant au moins un cylindre, chaque cylindre comprenant un piston selon l'une des caractéristiques précédentes, ledit piston coulissant dans ledit cylindre, au moins un conduit d'admission pourvu une soupape d'admission et au moins un conduit d'échappement pourvu d'une soupape d'échappement, chaque cylindre comprenant une chambre de combustion, ladite chambre de combustion étant délimitée par la face supérieure dudit piston, par la surface interne dudit cylindre et par ladite culasse.

Selon un mode de réalisation, ladite culasse comporte une forme de toit.

Conformément à une mise en œuvre, ledit au moins un conduit d'admission comprend des moyens pour générer un mouvement aérodynamique du gaz au sein dudit cylindre autour d'un axe sensiblement colinéaire à l'axe dudit cylindre et/ou autour d'un axe sensiblement perpendiculaire à l'axe dudit cylindre.

En outre, l'invention concerne l'utilisation d'un moteur à combustion interne selon l'une des caractéristiques précédentes pour un cycle de Miller ou un cycle d'Atkinson.

D'autres caractéristiques et avantages du dispositif selon l'invention, apparaîtront à la lecture de la description ci-après d'exemples non limitatifs de réalisations, en se référant aux figures annexées et décrites ci-après.

### Liste des figures

La figure 1 illustre une vue tridimensionnelle d'un piston selon un art antérieur.
La figure 2 illustre une vue en coupe d'un piston selon un art antérieur.
La figure 3 illustre une vue tridimensionnelle d'un piston selon un mode de réalisation de l'invention.
La figure 4 illustre une vue en coupe d'un piston selon un mode de réalisation de l'invention.
La figure 5 illustre un mouvement aérodynamique du gaz dans la chambre de combustion pour un piston selon l'art antérieur.
La figure 6 illustre un mouvement aérodynamique du gaz dans la chambre de combustion pour un piston selon un mode de réalisation de l'invention.

### Description des modes de réalisation

L'invention concerne un piston de moteur à combustion interne, en particulier pour un moteur à combustion interne à allumage commandé. Le piston comporte, sur sa tête, c'est-à-dire sur la face du piston faisant face à la culasse du moteur à combustion interne (appelée face supérieure du piston), au moins un embrèvement pour une soupape d'admission, et au moins un embrèvement pour une soupape d'échappement. Les embrèvements sont des évidements pratiqués sur la face supérieure du piston pour permettre le passage des soupapes d'admission et/ou d'échappement. Généralement les embrèvements pour soupape d'admission peuvent être différents des embrèvements pour soupape d'échappement. Ces embrèvements permettent d'obtenir un dispositif compact en réduisant l'encombrement, et permettent l'ouverture des soupapes d'admission et d'échappement au point mort haut du piston.

De plus, la face supérieure du piston comprend une surface de raccordement entre l'au moins un embrèvement pour soupape d'admission et l'au moins un embrèvement pour soupape d'échappement. La surface de raccordement peut être plane ou courbe.

Selon l'invention, la surface de raccordement comprend une portion inclinée en direction de l'au moins un embrèvement de soupape d'échappement. La portion est inclinée par rapport à un plan perpendiculaire à l'axe du piston. En d'autres termes, au moins une partie de la surface de raccordement est inclinée, et son inclinaison est dirigée vers l'au moins un embrèvement pour soupape d'échappement. Cette portion inclinée permet de diriger le mouvement aérodynamique du gaz vers l'échappement.

De plus, la portion inclinée est sécante avec l'au moins un embrèvement pour soupape d'échappement. La zone la plus profonde de la portion inclinée est au niveau de l'intersection entre l'au moins un embrèvement pour soupape d'échappement. Ainsi, l'au moins un embrèvement pour soupape d'échappement ne forme pas de zone de recirculation du gaz dans la chambre de combustion.

En outre, dans un plan perpendiculaire à l'axe du piston, un axe médian de la portion inclinée qui sépare d'un côté l'au moins un embrèvement pour une soupape d'admission et de l'autre côté l'au moins un embrèvement pour une soupape d'échappement est désaxé par rapport à un axe médian du piston qui sépare d'un côté l'au moins un embrèvement pour une soupape d'admission et de l'autre côté l'au moins un embrèvement pour une soupape d'échappement. On appelle axe médian, un axe qui est équidistant de points ou de côtés opposés de la forme considérée (forme du piston ou portion inclinée). En d'autres termes, dans un plan perpendiculaire à l'axe du piston (pouvant correspondre à une vue de dessus du piston, lorsque celui-ci est disposé verticalement), la portion inclinée n'est pas centrée avec le piston, et ce décentrage est agencé selon une direction qui passe par l'au moins un embrèvement pour soupape d'admission et par l'au moins un embrèvement pour soupape d'échappement. En raison de l'intersection entre la portion inclinée et l'au moins un embrèvement pour soupape d'échappement et en raison de ce décentrage, l'axe médian de la portion inclinée est plus proche de l'au moins un embrèvement pour soupape d'échappement que de l'au moins un embrèvement pour soupape d'admission.

Selon un mode de réalisation de l'invention, la portion inclinée peut être plane.

Pour ce mode de réalisation, la surface de raccordement non comprise dans la portion inclinée peut être plane, et peut être perpendiculaire à l'axe du piston. L'expression « surface de raccordement non comprise dans la portion inclinée » désigne la surface de raccordement entre l'au moins un embrèvement pour soupape d'admission et l'au moins un embrèvement pour soupape d'échappement à l'exception de la portion inclinée. Cette conception de la surface de raccordement est simple.

En variante, la portion inclinée peut être concave (courbe, en forme de lentille). De préférence, la concavité de la portion inclinée peut être formée par une portion de cylindre ou une portion de sphère. Etant donné le décentrage de la portion inclinée, l'axe (par exemple dans le cas d'une portion de cylindre) ou le centre (par exemple dans le cas d'une portion de sphère) de la concavité n'est pas sécant avec l'axe du piston. Autrement dit, le centre ou l'axe de la concavité de la portion inclinée est décentré par rapport à l'axe du piston. La concavité de la portion inclinée permet d'améliorer la combustion au sein de la chambre de combustion, en améliorant la forme du volume de celle-ci.

Pour ce mode de réalisation, la surface de raccordement non comprise dans la portion inclinée peut être concave (courbe, en forme de lentille). De préférence, la concavité de la surface de raccordement peut être formée par une portion de cylindre ou une portion de sphère. L'axe (par exemple dans le cas d'une portion de cylindre) ou le centre (par exemple dans le cas d'une portion de sphère) de la concavité est sécant avec l'axe du piston.

Autrement dit, le centre de la concavité de la surface de raccordement appartient à l'axe du piston, ou l'axe de la concavité de la surface de raccordement appartient à l'axe du piston.

Pour cette dernière mise en œuvre, le rayon de concavité (rayon du cylindre ou de la sphère le cas échéant) de la surface de raccordement peut être supérieur au rayon de concavité (rayon du cylindre ou de la sphère le cas échéant) de la portion inclinée. Les rayons de concavité peuvent être importants par rapport à la taille du piston. Selon un exemple non limitatif, les rayons peuvent valoir plusieurs centaines de mm, ils peuvent par exemple être compris entre 100 et 1000 mm, et préférentiellement entre 200 et 600 mm. Ainsi, la courbure de la surface de raccordement est plus importante pour la portion inclinée, ce qui favorise la direction du mouvement aérodynamique du gaz vers l'échappement.

Alternativement, pour ce mode de réalisation, la surface de raccordement non comprise dans la portion inclinée peut être plane, et peut être perpendiculaire à l'axe du piston.

De préférence, la surface de raccordement peut ne comporter aucun élément en saillie. En effet, les éléments en saillie favorisent la modification du mouvement aérodynamique du gaz.

Selon un mode de l'invention, le piston peut comprendre deux embrèvements pour soupape d'admission. Ainsi, le piston est adapté à un moteur à combustion interne avec deux soupapes d'admission.

Alternativement ou cumulativement, le piston peut comprendre deux embrèvements pour soupape d'échappement. Ainsi, le piston est adapté à un moteur à combustion interne avec deux soupapes d'échappements.

De préférence, le piston peut comprendre deux embrèvements pour soupape d'admission et deux embrèvements pour soupape d'échappement. Ainsi, le piston est adapté à un moteur à combustion interne avec quatre soupapes. Pour cette réalisation, les deux embrèvements de soupape d'admission peuvent être à proximité l'un de l'autre, et les deux embrèvements de soupape d'échappement peuvent être à proximité l'un de l'autre.

Afin d'optimiser la direction du mouvement aérodynamique du gaz dans la chambre de combustion, l'angle d'inclinaison de la portion inclinée par rapport à un plan perpendiculaire à l'axe du piston peut être inférieur à 25°, et peut de préférence être compris entre 2 et 15°.

Lorsque la portion inclinée est plane, l'angle d'inclinaison correspond à l'angle formé entre le plan de la portion inclinée et un plan perpendiculaire à l'axe du piston. Lorsque la portion inclinée est concave ou non plane, l'angle d'inclinaison peut être défini, dans un plan de coupe qui passe par un embrèvement d'admission et un embrèvement d'échappement et qui est parallèle à l'axe du piston, par l'angle formé entre une droite qui passe par le point le plus haut et par le point le plus bas de la portion inclinée, et une droite appartenant à un plan perpendiculaire à l'axe du piston.

Conformément à une mise en œuvre de l'invention, la portion inclinée peut être sécante avec l'au moins un embrèvement pour soupape d'échappement avec un rayon de courbure compris entre 1 et 500 mm, de préférence entre 5 et 50 mm. Ce rayon de courbure permet d'éviter les intersections trop abruptes qui peuvent provoquer des zones de recirculation du gaz dans la chambre de combustion.

Selon un aspect de l'invention, au niveau de l'intersection entre la portion inclinée et l'au moins un embrèvement pour une soupape d'échappement, la hauteur de la portion inclinée (la dimension de la portion inclinée selon une direction parallèle à l'axe du piston) par rapport à la surface de raccordement non comprise dans la portion inclinée peut être inférieure ou égale à 10 mm, de préférence inférieure ou égale à 5 mm. Ainsi, cette hauteur permet de garantir une intersection optimisée avec l'au moins un embrèvement pour soupape d'échappement.

Selon un mode de réalisation de l'invention, dans un plan perpendiculaire à l'axe du piston, la portion inclinée peut avoir sensiblement une forme d'un quadrilatère, de préférence la forme d'un rectangle ou d'un trapèze, par exemple sensiblement une forme de carré. De préférence, au moins un côté du quadrilatère (de manière très préférée deux côtés du quadrilatère) peut être parallèle à un axe médian du piston qui sépare d'une part l'au moins un embrèvement pour une soupape d'admission et d'autre part l'au moins un embrèvement pour une soupape d'échappement. Lorsque le piston comporte deux embrèvements pour soupape d'échappement, un côté du quadrilatère peut correspondre à un segment de droite entre les deux embrèvements pour soupape d'échappement. Cette forme assure une bonne surface pour orienter le mouvement aérodynamique du gaz.

Pour ce mode de réalisation, la surface de raccordement non comprise dans la portion inclinée peut avoir sensiblement la forme d'un U dans un plan perpendiculaire à l'axe du piston.

De préférence, la portion inclinée peut avoir une forme symétrique par rapport à un plan qui comporte un l'axe du piston et un axe perpendiculaire à l'axe médian de la portion inclinée qui sépare d'un côté l'au moins un embrèvement pour une soupape d'admission et de l'autre côté l'au moins un embrèvement pour une soupape d'échappement. Cette symétrie permet une symétrie du piston, ainsi qu'une bonne distribution du gaz, en particulier lorsque deux embrèvements pour soupape d'échappement sont prévues. On peut noter que l'axe de symétrie est perpendiculaire à l'axe médian de la surface inclinée qui sépare d'un côté l'au moins un embrèvement pour soupape d'admission, et de l'autre côté l'au moins un embrèvement pour soupape d'échappement. Cet axe de symétrie est également perpendiculaire à l'axe médian du piston qui sépare d'un côté l'au moins un embrèvement pour soupape d'admission, et de l'autre côté l'au moins un embrèvement pour soupape d'échappement.

Selon une mise en œuvre de l'invention, dans un plan perpendiculaire à l'axe du piston, la portion inclinée peut représenter au moins 40 % et au plus 80 % de la totalité de la surface de raccordement. Ainsi, une grande partie de la surface de raccordement sert pour la direction du mouvement aérodynamique du gaz.

La portion inclinée peut être réalisée directement lors de la fabrication du piston, par exemple par fonderie ou par fabrication additive. Alternativement, la portion inclinée peut être réalisée par usinage.

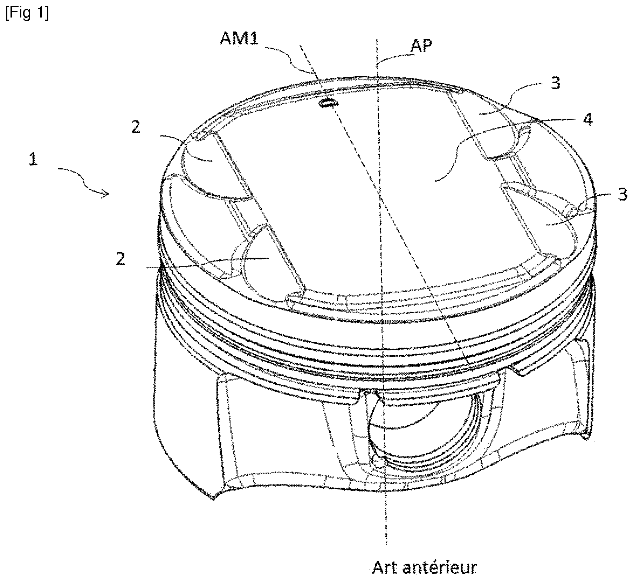

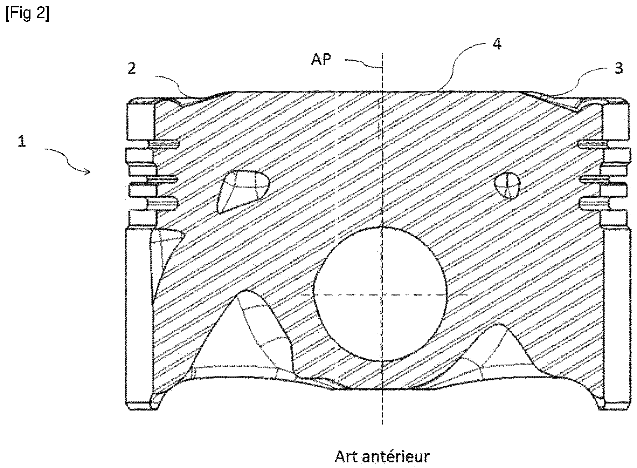

Les figures 1 et 2 illustrent, schématiquement et de manière non limitative, un piston selon un art antérieur. La figure 1 est une vue tridimensionnelle du piston, et la figure 2 est une vue en coupe du piston selon un plan passant par un embrèvement pour soupape d'admission et un embrèvement pour soupape d'échappement. Le piston 1 comporte deux embrèvements 2 pour soupape d'admission. Le piston 1 comporte également deux embrèvements 3 pour soupape d'échappement. Une surface de raccordement 4 plane est prévue entre les embrèvements 2 pour soupape d'admission et les embrèvements 3 pour soupape d'échappement. Sur la figure 1, on a représenté l'axe du piston AP, ici sensiblement vertical, ainsi que l'axe médian AM1 du piston 1, cet axe médian AM1 du piston 1 sépare d'un côté les embrèvements 2 pour soupape d'admission, et de l'autre côté les embrèvements 3 pour soupape d'échappement.

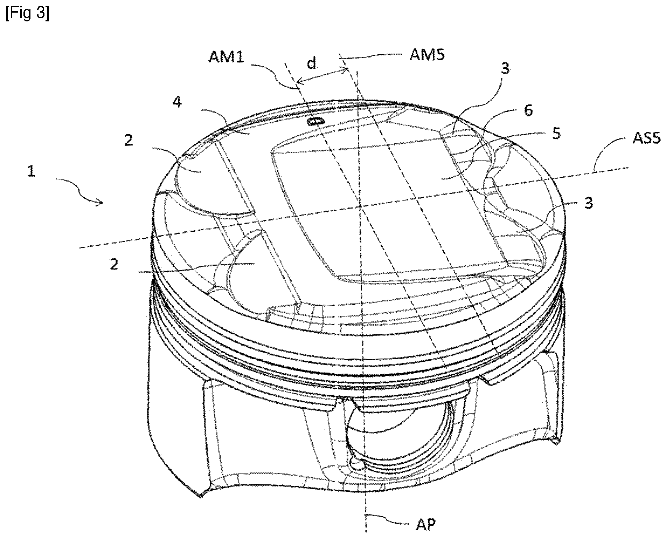

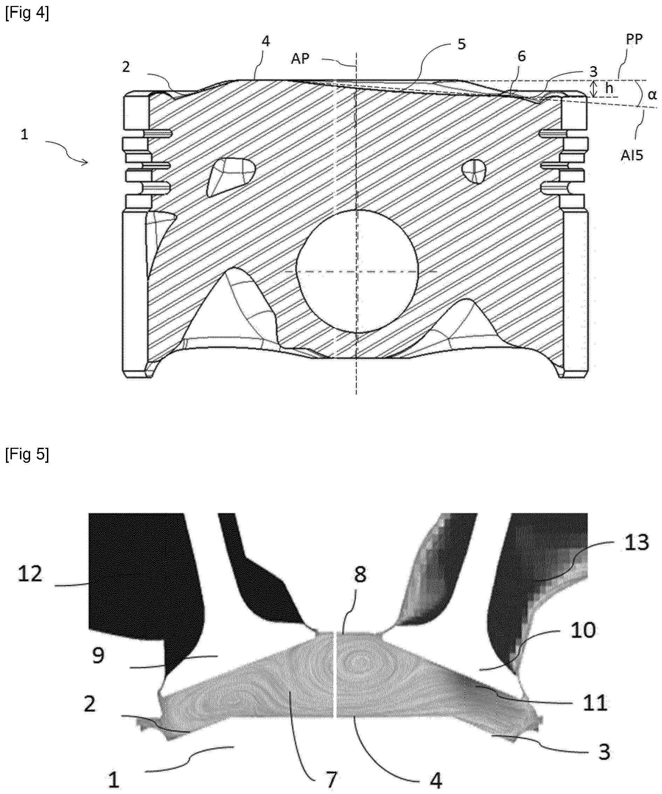

Les figures 3 et 4 illustrent, schématiquement et de manière non limitative, un piston selon un mode de réalisation de l'invention. La figure 3 est une vue tridimensionnelle du piston, et la figure 4 est une vue en coupe du piston selon un plan passant par un embrèvement pour soupape d'admission et un embrèvement pour soupape d'échappement. Le piston 1 comporte deux embrèvements 2 pour soupape d'admission. Le piston 1 comporte également deux embrèvements 4 pour soupape d'échappement. Une surface de raccordement 4 est prévue entre les embrèvements 2 pour soupape d'admission et les embrèvements 3 pour soupape d'échappement. La surface de raccordement 4 comporte au moins une portion inclinée 5 dirigée vers les embrèvements 3 pour soupape d'échappement. Pour le mode de réalisation illustré, en vue de dessus (selon un plan perpendiculaire à l'axe du piston), la portion inclinée a sensiblement la forme d'un rectangle, et la partie restante de la surface de raccordement a sensiblement la forme d'un U. La portion inclinée 5 a une forme concave et le restant de la surface de raccordement 4 est plane.

Sur la figure 3, on a représenté l'axe du piston AP, ici sensiblement vertical, ainsi que l'axe médian AM1 du piston 1, cet axe médian AM1 sépare d'un côté les embrèvements 2 pour soupape d'admission, et de l'autre côté les embrèvements 3 pour soupape d'échappement. De plus, on a représenté l'axe médian AM5 de la portion inclinée, qui sépare d'un côté les embrèvements 2 pour soupape d'admission, et de l'autre côté les embrèvements 3 pour soupape d'échappement. Cet axe médian AM5 de la portion inclinée 5 est désaxé d'une distance d par rapport à l'axe médian AM1 du piston 1. De plus, on représente un axe de symétrie AS5 de la portion inclinée 5, qui définit un plan de symétrie du piston 1 avec l'axe du piston AP.

Sur la figure 4, on a représenté l'axe du piston AP, un axe PP perpendiculaire à l'axe du piston AP (donc appartenant à un plan perpendiculaire à l'axe de piston). La référence 6 désigne l'intersection entre la portion inclinée 5 et les embrèvements 3 pour soupape d'échappement. La hauteur entre l'intersection 6 et la surface de raccordement non comprise dans la portion inclinée 4 est notée h. De plus, l'angle d'inclinaison de la portion inclinée 5 par rapport à un plan perpendiculaire PP à l'axe du piston est noté α. Cet angle est défini par rapport à un axe d'inclinaison AI5 qui passe dans le plan de coupe de la figure 4 par le point le plus haut et le point le plus bas de la portion inclinée 5.

De plus, la présente invention concerne un moteur à combustion interne comportant au moins un cylindre, chaque cylindre étant pourvu :
- d'au moins un dispositif d'admission avantageusement équipé d'une soupape d'admission, pour l'admission d'un gaz dans le cylindre,
- d'au moins un dispositif d'échappement, pour évacuer les gaz brulés du cylindre, le dispositif d'échappement est avantageusement équipé d'une soupape d'échappement,
- une culasse comprenant à minima l'au moins un dispositif d'admission et l'au moins un dispositif d'échappement,
- d'un piston ayant un mouvement de translation rectiligne alternatif dans le cylindre pour générer une énergie mécanique à partir de la combustion (par rotation d'un vilebrequin), le piston étant conforme à l'une des variantes ou des combinaisons de variantes décrites ci-dessus, et
- de moyens d'injection de carburant, pour générer une combustion.

Au sein du cylindre, une chambre de combustion est formée par la surface supérieure du piston, la paroi du cylindre, et la culasse.

Selon un mode de réalisation, les moyens d'injection de carburant peuvent être des moyens d'injection directe, c'est-à-dire que les moyens d'injection de carburant sont disposés directement dans le cylindre.

Alternativement, les moyens d'injection de carburant peuvent être des moyens d'injection indirecte, c'est-à-dire que les moyens d'injection de carburant sont disposés dans le dispositif d'admission.

Selon une mise en œuvre de l'invention, le moteur à combustion interne est un moteur à allumage commandé. Dans ce cas, le moteur comporte en outre au moins une bougie d'allumage pour générer la combustion du mélange gaz et carburant.

Alternativement, le moteur à combustion interne est un moteur à allumage par compression. Dans ce cas, le moteur ne comporte aucune bougie pour générer la combustion du mélange gaz et carburant.

Le moteur à combustion interne peut comporter une pluralité de cylindres, notamment 3, 4, 5 ou 6 cylindres.

De préférence, le moteur à combustion peut être un moteur à quatre soupapes par cylindre (deux soupapes d'admission et deux soupapes d'échappement).

Selon un mode de réalisation de l'invention, la culasse peut avoir sensiblement une forme de toit (triangulaire « en volume »). Cette forme de la culasse permet une forme optimisée de la chambre de la combustion et favorise le mouvement du gaz par rapport à une forme plane de la culasse.

Conformément à une mise en œuvre de l'invention, le cylindre peut comporter des moyens pour générer un mouvement aérodynamique du gaz au sein de la chambre de combustion autour d'un axe sensiblement colinéaire à l'axe du cylindre (correspondant à l'axe du piston), générant ainsi un mouvement de swirl.

Alternativement ou additionnellement, le cylindre peut comporter des moyens pour générer un mouvement aérodynamique du gaz au sein de la chambre de combustion autour d'un axe sensiblement perpendiculaire à l'axe du cylindre (correspondant à l'axe du piston), générant ainsi un mouvement de tumble.

De préférence, le cylindre peut comprendre des moyens pour générer un mouvement aérodynamique du gaz au sein de la chambre de combustion autour d'un axe sensiblement colinéaire à l'axe du cylindre, et autour d'un axe sensiblement perpendiculaire à l'axe du cylindre, générant ainsi un mouvement de Swumble^{™}. La présente invention est particulièrement adaptée pour cette réalisation, étant donné que le piston permet un bon déplacement du mouvement turbulent du gaz, en particulier vers l'échappement lors de la remontée du piston vers le point mort haut.

Pour ce mode de réalisation, le dispositif d'admission peut être prévu pour générer les mouvements de tumble, de swirl ou de Swumble^{™}.

Par exemple, le dispositif d'admission peut comporter un conduit d'admission avec une forme de tremplin et/ou une convergence de la section de passage du conduit d'admission, et/ou une inclinaison du conduit d'admission et/ou un masque et/ou une rotation de l'extrémité du conduit d'admission, etc.

Le conduit d'admission peut notamment être conforme à l'un des conduits d'admission décrits dans les demandes de brevet : FR3080888 (WO2019/211040), FR3091906 (WO2020/151985), FR3095235 (WO2020/212115), FR3095236 (WO2020/212117), et FR3095237 (WO2020/212112).

En outre, la présente invention concerne l'utilisation d'un moteur à combustion interne selon l'une des variantes ou combinaison de variantes décrites précédemment selon un cycle de Miller ou un cycle d'Atkinson.

Le cycle de Miller est un cycle thermodynamique se caractérisant par une fermeture de la ou des soupapes d'admission avant le point mort bas du piston lors de la phase admission. Cela permet d'augmenter le taux de compression géométrique à iso taux de compression effectif, et donc d'avoir un travail récupéré plus important via l'augmentation du taux de détente en plus d'un refroidissement de la charge admise. Le dispositif d'admission selon l'invention est particulièrement adapté pour une utilisation en cycle dit Miller sur une plage étendue de fonctionnement grâce à la génération d'un mouvement aérodynamique du gaz de type Swumble^{™}.

Le cycle d'Atkinson est le cycle thermodynamique standard utilisé dans les moteurs à combustion.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

Comme il va de soi, l'invention ne se limite pas aux seules formes de réalisation du piston, décrits ci-dessus à titre d'exemple, elle embrasse au contraire toutes les variantes de réalisation.

### Exemple comparatif

Les caractéristiques et avantages du piston selon l'invention apparaîtront plus clairement à la lecture de l'exemple d'application ci-après.

Pour cet exemple comparatif, on compare, par simulation de dynamique des fluides numérique CFD (de l'anglais « computational fluid dynamics »), le mouvement aérodynamique du gaz dans la chambre de combustion d'un cylindre équipé d'un piston selon un mode de réalisation de l'invention (selon le mode de réalisation des figures 3 et 4), avec le mouvement aérodynamique du gaz dans la chambre de combustion d'un cylindre équipé d'un piston selon un art antérieur (selon l'art antérieur des figures 1 et 2), l'admission et l'échappement étant identique pour les deux simulations, en particulier le conduit d'admission est configuré pour générer un mouvement aérodynamique de gaz de type Swumble^{™}.

La figure 5 est une vue en coupe schématique du système de combustion à la fin de la compression au point mort haut avec un piston selon l'art antérieur. Sur cette figure, on représente (en blanc) la face supérieure du piston 1 avec un embrèvement 2 pour soupape d'admission, un embrèvement 3 pour soupape d'échappement, une surface de raccordement 4 plane. On représente également une culasse 8 en forme de toit avec une soupape d'admission 9 (en blanc) dans un conduit d'admission 12, et une soupape d'échappement 10 (en blanc) dans un conduit d'admission 13. Sur cette figure, on constate que le mouvement aérodynamique du gaz (lignes de courant en gris) est confiné au centre de la chambre de combustion 7 et ne pénètre pas sous les soupapes échappement 3, créant une zone 11 de forte température.

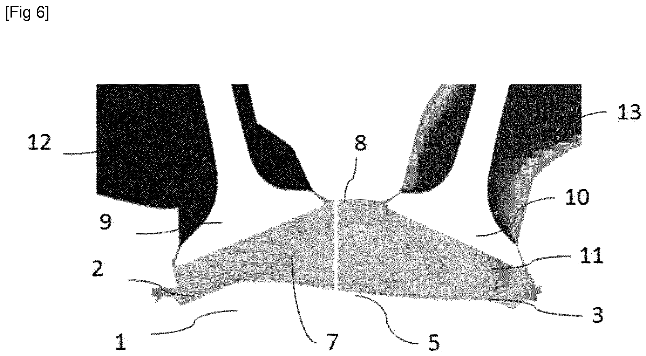

La figure 6 est une vue en coupe schématique et non limitative du système de combustion à la fin de la compression au point mort haut avec un piston selon un mode de réalisation de l'invention. Sur cette figure, on représente (en blanc) la face supérieure du piston 1 avec un embrèvement 2 pour soupape d'admission, un embrèvement 3 pour soupape d'échappement, une surface de raccordement avec une portion inclinée 5 concave. On représente également une culasse 8 en forme de toit avec une soupape d'admission 9 (en blanc) dans un conduit d'admission 12, et une soupape d'échappement 10 (en blanc) dans un conduit d'admission 13. Sur cette figure, on constate que le mouvement aérodynamique du gaz (lignes de courant en gris) est beaucoup plus développé et s'étend sous les soupapes échappement, éliminant la zone de forte température (la zone 11 est largement réduite par rapport à la figure 5).

Ainsi, l'invention permet un bon déplacement du mouvement aérodynamique du gaz dans la chambre de combustion vers l'échappement lors de la remontée du piston vers le point mort haut, et limite les zones de fortes températures.

## Revendications

1. Piston de moteur à combustion interne, ledit piston (1) comprenant au moins un embrèvement pour une soupape d'admission (2) et au moins un embrèvement pour une soupape d'échappement (3), ledit piston (1) comportant une surface de raccordement (4) entre ledit au moins un embrèvement pour une soupape d'admission (2) et ledit au moins un embrèvement pour une soupape d'échappement (3), ladite surface de raccordement (4) comportant une portion inclinée (5), ladite portion inclinée (5) étant sécante dudit au moins un embrèvement pour une soupape d'échappement (3), et dans un plan perpendiculaire à l'axe dudit piston (AP), un axe médian de ladite portion inclinée (AM5) qui sépare ledit au moins un embrèvement pour une soupape d'admission (2) et ledit au moins un embrèvement pour une soupape d'échappement (3) étant désaxé par rapport à un axe médian dudit piston (AM1) qui sépare ledit au moins un embrèvement pour une soupape d'admission (2) et ledit au moins un embrèvement pour une soupape d'échappement (3),
**caractérisé en ce que**
la zone la plus profonde de la portion inclinée est au niveau de l'intersection avec l'au moins un embrèvement pour soupape d'échappement.

2. Piston de moteur à combustion interne selon la revendication 1, dans lequel ladite portion inclinée (5) est plane.

3. Piston de moteur à combustion interne selon la revendication 2, dans lequel ladite surface de raccordement non comprise dans ladite portion inclinée est plane et perpendiculaire à l'axe dudit piston (AP).

4. Piston de moteur à combustion interne selon la revendication 1, dans lequel ladite portion inclinée (5) est concave, l'axe ou le centre de ladite concavité de la portion inclinée (5) étant non sécant à l'axe dudit piston (AP).

5. Piston de moteur à combustion interne selon la revendication 4, dans lequel ladite surface de raccordement non comprise dans ladite portion inclinée est concave, l'axe ou le centre de ladite concavité de ladite surface de raccordement étant sécant à l'axe dudit piston (AP).

6. Piston de moteur de combustion interne selon l'une des revendications précédentes, dans lequel ledit piston comprend deux embrèvements pour une soupape d'admission (2).

7. Piston de moteur de combustion interne selon l'une des revendications précédentes, dans lequel ledit piston comprend deux embrèvements pour une soupape d'échappement (3).

8. Piston de moteur de combustion interne selon l'une des revendications précédentes, dans lequel l'angle d'inclinaison (α) de ladite portion inclinée (5) par rapport à un plan perpendiculaire à l'axe du piston (AP) est inférieur à 25°, de préférence est compris entre 2 et 15°.

9. Piston de moteur de combustion interne selon l'une des revendications précédentes, dans lequel ladite portion inclinée (5) est sécante avec ledit au moins un embrèvement pour soupape d'échappement (3) avec un rayon de courbure compris entre 1 et 500 mm, de préférence entre 5 et 50 mm.

10. Piston de moteur de combustion interne selon l'une des revendications précédentes, dans lequel au niveau de l'intersection (6) entre ladite portion inclinée (5) et ledit au moins un embrèvement pour une soupape d'échappement (3), la hauteur (h) entre ladite portion inclinée (5) par rapport à ladite surface de raccordement est inférieure ou égale à 10 mm, de préférence inférieure ou égale à 5 mm.

11. Piston de moteur de combustion interne selon l'une des revendications précédentes, dans lequel ladite portion inclinée (5) a une forme sensiblement rectangulaire dans un plan perpendiculaire à l'axe du piston (AP), de préférence une forme sensiblement carré.

12. Moteur à combustion interne, notamment un moteur à combustion interne à allumage commandé, le moteur comprenant au moins un cylindre, chaque cylindre comprenant un piston (1) selon l'une des revendications précédentes, ledit piston (1) coulissant dans ledit cylindre, au moins un conduit d'admission (12) pourvu une soupape d'admission (9) et au moins un conduit d'échappement (13) pourvu d'une soupape d'échappement (10), chaque cylindre comprenant une chambre de combustion (7), ladite chambre de combustion (7) étant délimitée par la face supérieure dudit piston (1), par la surface interne dudit cylindre et par ladite culasse.

13. Moteur à combustion interne selon la revendication 12, dans lequel ladite culasse comporte une forme de toit (8).

14. Moteur à combustion interne selon l'une des revendications 12 ou 13, dans lequel ledit au moins un conduit d'admission (12) comprend des moyens pour générer un mouvement aérodynamique du gaz au sein dudit cylindre autour d'un axe sensiblement colinéaire à l'axe dudit cylindre et/ou autour d'un axe sensiblement perpendiculaire à l'axe dudit cylindre.

15. Utilisation d'un moteur à combustion interne selon l'une des revendications 12 à 14 pour un cycle de Miller ou un cycle d'Atkinson.

## Patentansprüche

1. Kolben eines Verbrennungsmotors, wobei der Kolben (1) mindestens eine Aussparung für ein Einlassventil (2) und mindestens eine Aussparung für ein Auslassventil (3) beinhaltet, wobei der Kolben (1) eine Verbindungsfläche (4) zwischen der mindestens einen Aussparung für ein Einlassventil (2) und der mindestens einen Aussparung für ein Auslassventil (3) umfasst, wobei die Verbindungsfläche (4) einen geneigten Abschnitt (5) umfasst, wobei der geneigte Abschnitt (5) die mindestens eine Aussparung für ein Auslassventil (3) schneidet und wobei in einer Ebene senkrecht zu der Achse des Kolbens (AP) eine Mittelachse des geneigten Abschnitts (AM5), die die mindestens eine Aussparung für ein Einlassventil (2) und die mindestens eine Aussparung für ein Auslassventil (3) trennt, in Bezug auf eine Mittelachse des Kolbens (AM1), die die mindestens eine Aussparung für ein Einlassventil (2) und die mindestens eine Aussparung für ein Auslassventil (3) trennt, verschoben ist,
**dadurch gekennzeichnet, dass**
sich der tiefste Bereich des geneigten Abschnitts an der Schnittstelle mit der mindestens einen Auslassventilaussparung befindet.

2. Kolben eines Verbrennungsmotors nach Anspruch 1, wobei der geneigte Abschnitt (5) eben ist.

3. Kolben eines Verbrennungsmotors nach Anspruch 2, wobei die Verbindungsfläche, die nicht in dem geneigten Abschnitt enthalten ist, eben und zu der Achse des Kolbens (AP) senkrecht ist.

4. Kolben eines Verbrennungsmotors nach Anspruch 1, wobei der geneigte Abschnitt (5) konkav ist, wobei die Achse oder die Mitte der Konkavität des geneigten Abschnitts (5) die Achse des Kolbens (AP) nicht schneidet.

5. Kolben eines Verbrennungsmotors nach Anspruch 4, wobei die Verbindungsfläche, die nicht in dem geneigten Abschnitt enthalten ist, konkav ist, wobei die Achse oder die Mitte der Konkavität der Verbindungsfläche die Achse des Kolbens (AP) schneidet.

6. Kolben eines Verbrennungsmotors nach einem der vorhergehenden Ansprüche, wobei der Kolben zwei Aussparungen für ein Einlassventil (2) beinhaltet.

7. Kolben eines Verbrennungsmotors nach einem der vorhergehenden Ansprüche, wobei der Kolben zwei Aussparungen für ein Auslassventil (3) beinhaltet.

8. Kolben eines Verbrennungsmotors nach einem der vorhergehenden Ansprüche, wobei der Neigungswinkel (α) des geneigten Abschnitts (5) in Bezug auf eine Ebene senkrecht zu der Achse des Kolbens (AP) kleiner als 25° ist, vorzugsweise zwischen 2 und 15° beträgt.

9. Kolben eines Verbrennungsmotors nach einem der vorhergehenden Ansprüche, wobei der geneigte Abschnitt (5) die mindestens eine Auslassventilaussparung (3) mit einem Krümmungsradius schneidet, der zwischen 1 und 500 mm, vorzugsweise zwischen 5 und 50 mm, beträgt.

10. Kolben eines Verbrennungsmotors nach einem der vorhergehenden Ansprüche, wobei im Bereich der Schnittstelle (6) zwischen dem geneigten Abschnitt (5) und der mindestens einen Aussparung für ein Auslassventil (3) die Höhe (h) zwischen dem geneigten Abschnitt (5) bezogen auf die Verbindungsfläche kleiner als oder gleich 10 mm, vorzugsweise kleiner als oder gleich 5 mm, ist.

11. Kolben eines Verbrennungsmotors nach einem der vorhergehenden Ansprüche, wobei der geneigte Abschnitt (5) in einer Ebene senkrecht zu der Achse des Kolbens (AP) eine im Wesentlichen rechteckige Form, vorzugsweise eine im Wesentlichen quadratische Form, aufweist.

12. Verbrennungsmotor, insbesondere Verbrennungsmotor mit gesteuerter Zündung, wobei der Motor mindestens einen Zylinder beinhaltet, wobei jeder Zylinder einen Kolben (1) nach einem der vorhergehenden Ansprüche, wobei der Kolben (1) in dem Zylinder gleitet, mindestens einen Einlasskanal (12), der über ein Einlassventil (9) verfügt, und mindestens einen Auslasskanal (13), der über ein Auslassventil (10) verfügt, beinhaltet, wobei jeder Zylinder eine Brennkammer (7) beinhaltet, wobei die Brennkammer (7) durch die Oberseite des Kolbens (1), durch die Innenfläche des Zylinders und durch den Zylinderkopf begrenzt wird.

13. Verbrennungsmotor nach Anspruch 12, wobei der Zylinderkopf eine Dachform (8) umfasst.

14. Verbrennungsmotor nach einem der Ansprüche 12 oder 13, wobei der mindestens eine Einlasskanal (12) Mittel zur Erzeugung einer aerodynamischen Bewegung des Gases innerhalb des Zylinders um eine Achse, die im Wesentlichen kollinear zu der Achse des Zylinders ist, und/oder um eine Achse, die im Wesentlichen senkrecht zu der Achse des Zylinders ist, beinhaltet.

15. Verwendung eines Verbrennungsmotors nach einem der Ansprüche 12 bis 14 für einen Miller-Zyklus oder einen Atkinson-Zyklus.

## Claims

1. Piston for an internal combustion engine, said piston (1) comprising at least one recess for an intake valve (2) and at least one recess for an exhaust valve (3), said piston (1) comprising a connecting surface (4) between said at least one recess for an intake valve (2) and said at least one recess for an exhaust valve (3), said connecting surface (4) comprising an inclined portion (5), said inclined portion (5) being secant to said at least one recess for an exhaust valve (3), and in a plane perpendicular to the axis of said piston (AP), a median axis of said inclined portion (AM5), which separates said at least one recess for an intake valve (2) and said at least one recess for an exhaust valve (3), being offset with respect to a median axis of said piston (AM1) which separates said at least one recess for an intake valve (2) and said at least one recess for an exhaust valve (3),
**characterized in that**
the deepest zone of the inclined portion is at the level of the intersection with the at least one recess for an exhaust valve.

2. Piston for an internal combustion engine according to Claim 1, wherein said inclined portion (5) is planar.

3. Piston for an internal combustion engine according to Claim 2, wherein said connecting surface not included in said inclined portion is planar and perpendicular to the axis of said piston (AP).

4. Piston for an internal combustion engine according to Claim 1, wherein said inclined portion (5) is concave, the axis or the centre of said concavity of the inclined portion (5) being non-secant with the axis of said piston (AP).

5. Piston for an internal combustion engine according to Claim 4, wherein said connecting surface not included in said inclined portion is concave, the axis or the centre of said concavity of said connecting surface being secant with the axis of said piston (AP).

6. Piston for an internal combustion engine according to one of the preceding claims, wherein said piston comprises two recesses for an intake valve (2).

7. Piston for an internal combustion engine according to one of the preceding claims, wherein said piston comprises two recesses for an exhaust valve (3).

8. Piston for an internal combustion engine according to one of the preceding claims, wherein the angle of inclination (α) of said inclined portion (5) with respect to a plane perpendicular to the axis of the piston (AP) is less than 25°, and it is preferably comprised between 2 and 15°.

9. Piston for an internal combustion engine according to one of the preceding claims, wherein said inclined portion (5) is secant with said at least one recess for an exhaust valve (3), with a radius of curvature comprised between 1 and 500 mm, preferably between 5 and 50 mm.

10. Piston for an internal combustion engine according to one of the preceding claims, wherein, at the intersection (6) between said inclined portion (5) and said at least one recess for an exhaust valve (3), the height (h) between said inclined portion (5) with respect to said connecting surface is less than or equal to 10 mm, preferably less than or equal to 5 mm.

11. Piston for an internal combustion engine according to one of the preceding claims, wherein said inclined portion (5) has a substantially rectangular shape in a plane perpendicular to the axis of the piston (AP), preferably a substantially square shape.

12. Internal combustion engine, notably a controlled-ignition internal combustion engine, the engine comprising at least one cylinder, each cylinder comprising a piston (1) according to one of the preceding claims, said piston (1) sliding in said cylinder, at least one intake duct (12) provided with an intake valve (9) and at least one exhaust duct (13) provided with an exhaust valve (10), each cylinder comprising a combustion chamber (7), said combustion chamber (7) being delimited by the upper face of said piston (1), by the internal surface of said cylinder and by said cylinder head.

13. Internal combustion engine according to Claim 12, wherein said cylinder head has a roof shape (8).

14. Internal combustion engine according to one of Claims 12 and 13, wherein said at least one intake duct (12) comprises means for generating an aerodynamic movement of the gas within said cylinder about an axis substantially collinear with the axis of said cylinder and/or about an axis substantially perpendicular to the axis of said cylinder.

15. Use of an internal combustion engine according to one of Claims 12 to 14 for a Miller cycle or an Atkinson cycle.
